# EUROPEAN PATENT SPECIFICATION

(11) **EP 3 967 154 B1**
(45) Date of publication and mention of the grant of the patent: **30.08.2023**
(21) Application number: 21196663.5
(22) Date of filing: 14.09.2021
(51) Int. Cl.: A23L 27/40, A21D 2/00

(54) **FOOD ADDITIVE COMPRISING ALGAE**
NAHRUNGSMITTELZUSAMMENSETZUNG ENTHALTEND ALGEN
ADDITIF ALIMENTAIRE COMPRENANT UNE ALGUE

(30) Priority: 15.09.2020 NL 2026469
(43) Date of publication of application: 16.03.2022
(73) Proprietor: Algae Beheer B.V., 6674 AV Herveld (NL)
(72) Inventor: Hermans, Michel, Herveld (NL); de Vos, Ronald, Herveld (NL)
(74) Representative: van Breda, Jacobus

(56) References cited:
- WO-A1-2013/167749
- WO-A1-2016/131122
- CA-A1- 2 715 607
- CN-A- 109 691 665
- RO-B1- 112 232

## Description

The invention is directed to a food additive comprising one or more algae and a fungi extract.

The World Health Organization (WHO) recommends a daily intake of sodium by an adult to be below 2000 mg per day. This is about 5 g of NaCl (kitchen salt, sodium chloride) per day.

However, the average uptake per human being is, between 7 and 10 g per day. The high sodium intake causes high blood pressure and, connected herewith, a higher risk of vascular and heart diseases or a stroke in a substantial part of the population. Therefore, the amount of sodium should be reduced to about 1500 mg per day.

Most of the sodium is present in ready-made meals. This includes soups, bread, meat and ready-made dinners. Kitchen salt (NaCl) is the most important source, but not the only source, of sodium in food. Kitchen salt comes into our food by its use in the kitchen during the preparation of food or at the table before and/or during eating and because it is added to a big part of ready-to-eat food products. There are also other sources of sodium. Sodium is present in a small amount in most of the raw vegetable and animal products. Sodium is not only added in the form of kitchen salt to our food, but also in other forms, like sodium bicarbonate as a leavening agent in baking powder, sodium lactate that is added to meat products and monosodium glutamate (MSG or ve-tsin), a flavor enhancer that is used in the Asian kitchen.

The so-called 'salt substitutes' are mixtures of sodium chloride with potassium chloride and/or magnesium chloride or sodium chloride is completely replaced by potassium chloride, calcium chloride, magnesium chloride and/or magnesium sulphate. This replacement generally causes problems with taste, as the metals often cause an off-flavor, like for example a metallic taste, particularly known for potassium, or a bitter taste, particularly known for calcium. Although the content of ions is comparable in comparison with only sodium chloride the taste of the other salts generally is not salty.

Hence, in case the salty taste is relevant, this replacement often is not effective.

For reasons mentioned hereabove, there is a need to find an additive that makes is possible to lower the sodium concentration in food.

WO2013/167749 describes the use of a fungi extract in combination with calcium chloride or magnesium chloride for salt replacement in baked dough products, like bread. The disadvantage of the use of a large amount of fungi extract in bread is that it will have a 'mushroom' taste, which is undesirable. Therefore, according to the above-mentioned patent application the fungi extract is used in combination with other salts that replace NaCl.

Seaweeds (macro-algae), such as Laminaria (sea cabbage) and Ulva (sea lettuce) are used as food in Asia for a long time. However, the nutritional and health values of single-celled algae (micro-algae), such as Chlorella, Spirulina and others, were discovered more recently.

WO2016/131122 relates to the application and use of a natural extract such as derived from the white button mushroom (Agaricus bisporus), and which is used at low levels, in food products including soups, broths, gravy, sauces, meats, processed meats, and the like. WO2016/131122 teaches that low levels of natural extract can be dissolved or dispersed in the matrix of food products.

It is known now that algae contain a very high amount of chlorophyll, beta-carotene, proteins, which contain essential amino acids, and essential minerals. For example, Spirulina algae can contain 55-77% of healthy protein containing all essential amino acids. Algae are rich in essential amino acids and fatty acids, vitamins and minerals important for human health. Today's food products have a lack of these; especially new food products based on beans as meat replacers (vegatarian alternatives for meat and fish). Therefore, a proper amount of algae in these food products can not only restore its dietary and nutritional value, but can also enrich these products with healthy ingredients. Because of this, algae containing products become more and more popular among people taking care of their own health and a healthy lifestyle. This makes algae a good food additive with a high nutritional value.

CA2715607 A1 describes the use of a mixture of macro algae and micro algae as a bread additive. The algae are present in the flour in an amount of less than 15 wt%.

A higher amount of the algae in the flour is not recommended because the bread will have a green or other colour and will not look like bread anymore. It is difficult to lower the amount of NaCl in bread. NaCl in bread not only influences the taste, but also the stability and leavening of the dough which have a direct effect on the structure of the bread. Generally, bread contains about 18 g/kg NaCl. Replacement of NaCl in the bread should not lead to a distrinct umami or mushroom taste of the bread. The taste of the bread should remain neutral. After intensive research the inventors have now discovered that a food additive comprising both algae and a fungi extract can reduce or replace the amount of sodium in food products and will lead to food products with a good and preferable taste. Preferable taste being a taste that approximates or is otherwise indistinguishable from a food product in which the sodium had not been replaced. According to a further aspect of the invention a flour comprising the 0.1 to 20 wt%, preferably 0.5-15 wt%, most preferably 1-10 wt% of a food additive according to the invention is mixed with water to arrive at a dough for baking bread.

It has surprisingly been discovered that the combination of algae and fungi extract enhances the umami taste. Without being bound to this theory, the inventors are of the opinion that because of the presence of glutamine and glutamate in the algae and the presence of glutamate, inosinate and guanylate in the fungi extract, the taste of the combination of algae and fungi extract enhance each other's taste and has a stronger taste than can be obtained by adding only the algae or the fungi extract. A further advantage is that with the addition of algae and fungi extract to food also essential amino acids, fatty acids, minerals and vitamins are added to the food. This is of particular importance because of a lack of these essential nutrients in a vegetarian or vegan life style.

A further advantage is that no other metal salts, like calcium chloride or magnesium chloride, need to be used to replace NaCl. Thus, the food will have no off-taste due to other metal ions that replace sodium (Na).

The object of the invention is a food additive comprising one or more algae, chosen from the group of Chlorella sorokiniana, Chlorella vulgaris, Chlorella pyrenoidosa, Chlorella marina, Spirulina platensis, Nannochloropsis gaditana and Skeletonema costatum, and a fungi extract.

The food additive according to the invention comprises algae.

The algae are single-celled algae, preferably chosen from a group of Chlorellaceae, Arthrospira, Monodopsidaceae and/or Skeletonemataceae. Preferably, the algae are chosen from Chlorella sorokiniana, Chlorella vulgaris, Chlorella pyrenoidosa, Chlorella marina, Spirulina platensis, Nannochloropsis gaditana and Skeletonema costatum. In the above preference Chlorella sorokiniana, Chlorella vulgaris, Chlorella pyrenoidosa and Chlorella marina are each a specific Chlorellaceae. Spirulina platensis here is a specific Arthrospira. Nannochloropsis gaditana is a specific Monodopsidaceae. Skeletonema costatum is a specific Skeletonemataceae. Chlorella sorokiniana, Chlorella vulgaris, Chlorella pyrenoidosa, Chlorella marina, Spirulina platensis, Nannochloropsis gaditana and Skeletonema costatum are within their respective genera identified as more effective over the respective genera for NaCl replacement. More specifically Chlorella sorokiniana is identified as highly beneficial. Also combinations of one or more of these algae can be used. The amount of algae in the food additive is 30-80 wt%. The amount of algae can be for example 60-80 wt%.

The food additive according to the invention comprises a fungi extract. The fungi extract generally is a solution of cell components of the fungi. The solutions can be obtained by hydrolyzation of fungi material. Hydrolyzation can, for example, be achieved by enzymatic treatment, heat treatment or chemical treatment of the fungi material. The fungi are mushrooms of the type agaricus, more preferably of the type agaricus bisporus.

The fungi material comprises 1-octen-3-ol. The presence of 1-octen-3-ol is preferred because it is an important flavor component in the fungi extract. The fungi material comprises at least 25 wt% of 1-octen-3-ol, more preferably at least 30 wt% of 1-octen-3-ol, most preferably at least 40 wt% of 1-octen-3-ol.

The amount of fungi extract in the food additive is 20-70 wt%. The amount of fungi extract can be, for example 20-40 wt%.

The algae and the fungi extract are preferably obtained as a powder. The algae powder and the fungi powder are mixed by common means. The weight ratio between fungi powder and algae powder is preferably between 0.20 and 10, more preferably between 0.22 and 9, most preferably between 0.25 and 8.

The algae and the fungi extract contain essential amino acids, fatty acids and vitamins. These are particularly important when people have a vegetarian or vegan life style. Essential amino acids present in the food additive according to the invention are, for example, leucine (LEU), lysine (LYS), histamine (HIS), ileum (ILE)and methionine (MET). Essential fatty acids are, for example, Omega-3, Omega-6, Omega-9, eicosapentaenoic acid (EPA) and docosahexaenoic acid (DHA) Vitamins are, for example, the vitamins D, K1, K2, B11, B12 and C.

The food additive can comprise KCl, when this is necessary for the production of the bread and bread products. KCl functions as a replacement product for NaCl, because of its baking, leavening and proofing aspects. Further it improves the stability of the dough during its preparation, leading to more volume and a more regular structure in the finished product. This improves the digestibility of the finished product. The amount of KCl in the food additive preferably is 0 to 10 wt%, more preferably 0 to 8 wt%, most preferably 0 to 6 wt%.

The food additive can further comprise ascorbic acid (vitamin C) and/or salts thereof. Examples of salts of ascorbic acid are sodium ascorbate or calcium ascorbate. Also, the juice and extracts of fruit and vegetables with a high amount of ascorbic acid can be used in the food additive. Fruit with a high amount of ascorbic acid are, for example, acerola, guava, kiwifruit, orange, strawberry, papaya and tomato. Vegetables with a high amount of ascorbic acid are, for example, broccoli, bell pepper, kale and peas. Preferably, the food additive comprises 0 to 5 wt% of ascorbic acid and/or salts thereof, more preferably 0 to 4 wt% and most preferably 0 to 3 wt%. Ascorbic acid is added to the food additive because it raises the stability of the dough and gives it a better plasticity. The baked product will have more volume, a better bake-ability and a regular crumb structure.

The food additive can comprise fibers. Preferably, the fibers are plant-based fibers. Plant-based fibers can be soluble fiber, which dissolve in water, and insoluble fibers, which do not dissolve in water. Examples of soluble fibers are beta-glucans, guar gum, psyllium, inulin, wheat dextrin, oligosaccharides and starches. Examples of insoluble fibers are wheat bran, cellulose, and lignin. Combinations of fibers and of soluble and insoluble fibers can be used. Preferably, psyllium is used.

Preferably, the food additive comprises 0 to 50 wt% of fibers, more preferably 0 to 48 wt%, most preferably 1-45 wt%, for example 5-45 wt%. Fibers are added to the food additive to improve the strength of the dough during rising and baking. Because of the water absorption of the fibers, the dough will be dryer and easier to produce. By limiting the NaCl content in the dough, the dough will become too sticky during production. By adding fibers the stickiness of the dough will be reduced. The fibers will enhance the saturation feeling of a person after eating bread. The ingredients of the food additive can be present as dry ingredients, for example as powders, grains or pellets. Preferably the food additive is a powder. The ingredients can also be mixed with a liquid, preferably water, to form a solution, suspension or paste. That is to say, the liquid may be an additional ingredient in the food additive such as to form a solution , suspension or paste.

The food additive as a powder, as a solution, suspension or paste can be easily added to flour and other dry ingredients for making bread and bread products or the powder can be added during the preparation of dough. Further the food additive can be added as a powder in the preparation of dry soup mixes or dry sauce mixes. The food additive added to water can be easily added to dough for making bread and bread products or to vegetarian products, fish products and meat products.

The invention is also directed to the use of the food additive in the preparation of bread and bread products, soups, sauces, vegetarian products, fish products and meat products. As described above the food additive can be made available as a powder or as a solution, suspension or paste and can be easily added during the preparation of various food products. Preferably, the food additive is used in the preparation of bread and bread products. Bread products can be understood to be any product that makes use of a flour mixed with the food additive according to the invention, such as croutons, breaded fish, dough, breaded meat, and pasta.

By the addition of the food additive according to the invention to food products the amount of kitchen salt (NaCl) can be reduced. The food additive according to the invention is, thus, used to reduce or replace NaCl, without any compromises to the taste of the final product as such.

As described hereabove the food additive according to the invention contains essential amino acids, fatty acids, minerals and vitamins. With the addition of the food additive according to the invention these essential nutrients are added to food, which is of particular importance in a vegetarian or vegan life style.

The invention is further directed to flour comprising 0.1 to 20 wt%, preferably 0.5 to 15 wt%, most preferably 1 to 10 wt% of the food additive according to the invention. The invention is also directed to dough comprising 0.1 to 20 wt% of the food additive according to the invention, preferably 0.5 to 15 wt%, most preferably 1 to 10 wt%.

The amount of algae in dough for preparing bread is preferably not higher than 10 wt%. A higher amount of algae, though effectively replacing the salt, has a changes the color and/or smell of the baked bread. Such a change in familiar look and taste may to some be unappealing.

The amount of fungi extract in dough for preparing bread is preferably not higher than 3 wt%. A higher amount has a negative effect on the color and/or smell and/or taste of the baked bread. The amount of KCl in dough for preparing bread is preferably between 0.15 and 1.5 wt% and the amount of fibers in dough is preferably between 5 and 15 wt%.

The invention is further described by the accompanying examples, which are exemplary and explanatory of nature and are not limiting the scope of the invention. To the person skilled in the art it may be clear that many variants, being obvious or not, may be conceivable falling within the scope of protection, defined by the present claims.

### EXAMPLES (not according to the invention)

### Example 1

Preparation of bread dough as conventional for bakeries with 18 grams of table salt (NaCl) per 1000 grams of dough. Proofing and baking process as per normal recipe. Proofing 45 minutes, baking 35 minutes at 180 to 220 degrees Celsius.

### Conditions:

1. Table salt replaced with the food additive but without the fungi extract
2. Table salt replaced with the food additive but without the algae
3. Table salt replaced with the food additive

### Results:

1. Resulted in a non-appetizing bread with too strong algae taste in the bread
2. Resulted in a non-appetizing bread with a too strong mushroom like taste in the bread
3. Resulted in a conventional looking bread with conventional taste and odour.

The food additive in the above experimental example consisting of:
41 wt% of an algae mixture of Chlorellaceae and Skeletonematacea 1:2 in mass; It is noted that in this example the particular Chlorellaceae used is Chlorella sorokiniana and the particular Skeletonematacea is Skeletonema costatum.
13 wt% of a fungi extract from agaricus bisporus, such as presently marketed as Mycoplex powder (Bonusan^{®});containing Reishi (Ganoderma Lucidum), Cordyceps (Ophiocordyceps sinensis) and Maitake (Grifola frondosa). The amount of 1-octen-3-ol in the Mycoplex powder is 25 wt%.
5 wt% of KCl (potassium chloride), such as presently available on SigmaAldrich, or any other source;
41 wt% of psyllium fibers, such as presently available from MPF Benelux B.V., or any other source.

### Example 2

Bread is prepared in a commercial bread production line (20kg). The normal recipe of the commercial bakery was followed; proofing 45 to 60 minutes, baking 20-50 minutes at 180 to 220 degrees Celsius.

Table 1 below shows the amounts that are added to a normal bread recipe.

Mix: Mixture of the algae Chlorellaceae sorokinia in combination with a fungi extract from agaricus bisporus available from Kingusto. The amount of 1-octen-3-ol in the fungi extract is 25 wt%.

The weight ratio algae:fungi extract is 1:2. The weight percentage of the mix in the recipe is the weight relative to the weight of the flour.

Algae: Algae of Chlorellaceae sorokinia as described above. The weight percentage of the algae in the recipe is the weight relative to the weight of the flour.

Salt: NaCl, weight percentage of salt in the recipe is relative to the weight of the baked bread.

### Comparative Examples A,B and C

Comparative example A is used as a reference. This is the commercial recipe for a normal bread. The proofing, production and taste of this bread are scored with a 10 as a reference.

According to comparative examples B and C the amount of salt in the bread is lower and an algae extract is added. These breads can be produced in the commercial production line. However, the proofing of the dough of example C was not good.

Both breads showed green and brown dots. The taste of the breads was grassy, faint and mealy. During baking the temperature must be guarded, because the algae has the tendency to burn.

The breads according to Examples 1, 2 and 3 were comparable to the commercial bread. Proofing was a bit less and therefore the structure was more dense. The taste was good. The breads according to example 2 and 3 showed some green/brown dots. These recipes can replace the commercial recipe without problem.

The bread according to Example 4 did not contain any salt. Production was okay. Proofing was less and therefore the structure of the bread was more dense. The taste was more grassy and the bread showed green and brown dots. The bread according to example 4 can replace the commercial bread as a complete salt-free bread.

**Table 1**

| **Example** | **Salt (wt%)** | **Mix (wt%)** | **Algae (wt%)** | **proofing** | **production** | **Taste** |
|---|---|---|---|---|---|---|
| A | 2 | 0.0 | 0.0 | 10 | 10 | 10 |
| 1 | 1.5 | 1.0 | 0.0 | 8 | 9 | 9 |
| 2 | 1.0 | 2.0 | 0.0 | 8 | 9 | 8 |
| 3 | 0.5 | 3.0 | 0.0 | 8 | 9 | 9 |
| 4 | 0 | 4.0 | 0.0 | 8 | 8 | 7 |
| B | 1.0 | 0.0 | 1.5 | 8 | 8 | 6 |
| C | 0.5 | 0.0 | 3.0 | 7 | 8 | 5 |

## Claims

1. Food additive comprising 30 to 80 wt% of one or more algae, chosen from the group of Chlorellaceae, Arthrospira, Monodopsidaceae and Skeletonemataceae, and 70 to 20 wt% of a fungi extract, wherein the fungi extract is derived from mushrooms of the type agaricus, and wherein the fungi extract itself comprises at least 25 wt% of 1-octen-3-ol

2. Food additive according to claim 1, wherein the Arthrospira is Spirulina platensis, wherein the Monodopsidaceae is Nannochloropsis gaditana, wherein the Skeletonemataceae is Skeletonema costatum, and
wherein the Chlorellaceae is a Chlorella sorokiniana, a Chlorella vulgaris, a Chlorella pyrenoidosa or a Chlorella marina, preferably a Chlorella sorokiniana .

3. Food additive according to any one of claims 1-2, wherein the weight ratio between fungi extract and algae is between 0.20 and 10.

4. Food additive according to any one of claims 1-3, wherein the food additive also comprises KCl.

5. Food additive according to any one of claims 1-4, wherein the food additive also comprises ascorbic acid and/or salts thereof.

6. Food additive according to any one of claims 1-5, wherein the food additive also comprises fibers.

7. Food additive according to any one of claims 1-6, wherein the food additive is a powder, solution, suspension or paste.

8. Use of the food additive according to any one of claims 1-7, in the preparation of a human food product.

9. Use of the food additive according to claim 8, wherein the human food product is at least one of bread, bread product, soup, sauce, vegetarian product, meat product and fish product.

10. Use according to claim 9, wherein the food additive is used in the preparation of bread and bread products.

11. Use according to claim 8, 9 or 10, wherein the food additive is used to reduce or replace NaCl.

12. A flour comprising 0.1 to 20 wt %, preferably 0.5 to 15 wt%, more preferably 1 to 10 wt% of a food additive according to any one of claims 1-7.

13. A dough comprising 0.1 to 20 wt%, preferably 0.5 to 15 wt%, more preferably 1 to 10 wt% of a food additive according to any one of the claims 1-7.

## Patentansprüche

1. Lebensmitteladditiv, umfassend 30 bis 80 Gew.-% einer oder mehrerer Algen, ausgewählt aus der Gruppe aus Chlorellaceae, Arthrospira, Monodopsidaceae und Skeletonemataceae, und 70 bis 20 Gew.-% eines Pilzextrakts, wobei das Pilzextrakt von Pilzen des Typs Agaricus stammt, und wobei das Pilzextrakt selbst mindestens 25 Gew.-% 1-Octen-3-ol umfasst.

2. Lebensmitteladditiv gemäß Anspruch 1, wobei die Arthrospira Spirulina platensis ist, wobei die Monodopsidaceae Nannochloropsis gaditana ist, wobei die Skeletonemataceae Skeletonema costatum ist, und
wobei die Chlorellaceae eine Chlorella sorokiniana, eine Chlorella vulgaris, eine Chlorella pyrenoidosa oder eine Chlorella marina, bevorzugt eine Chlorella sorokiniana ist.

3. Lebensmitteladditiv gemäß einem der Ansprüche 1-2, wobei das Gewichtsverhältnis zwischen Pilzextrakt und Algen zwischen 0,20 und 10 beträgt.

4. Lebensmitteladditiv gemäß einem der Ansprüche 1-3, wobei das Lebensmitteladditiv auch KCl umfasst.

5. Lebensmitteladditiv gemäß einem der Ansprüche 1-4, wobei das Lebensmitteladditiv auch Ascorbinsäure und/oder Salze davon umfasst.

6. Lebensmitteladditiv gemäß einem der Ansprüche 1-5, wobei das Lebensmitteladditiv auch Fasern umfasst.

7. Lebensmitteladditiv gemäß einem der Ansprüche 1-6, wobei das Lebensmitteladditiv ein Pulver, eine Lösung, eine Suspension oder eine Paste ist.

8. Verwendung des Lebensmitteladditivs gemäß einem der Ansprüche 1-7 bei der Herstellung eines Lebensmittelprodukts für Menschen.

9. Verwendung des Lebensmitteladditivs gemäß Anspruch 8, wobei das Lebensmittelprodukt für Menschen mindestens eines aus Brot, Brotprodukt, Suppe, Soße, vegetarisches Produkt, Fleischprodukt und Fischprodukt ist.

10. Verwendung gemäß Anspruch 9, wobei das Lebensmitteladditiv bei der Herstellung von Brot und Brotprodukten verwendet wird.

11. Verwendung gemäß Anspruch 8, 9 oder 10, wobei das Lebensmitteladditiv verwendet wird, um NaCl zu reduzieren oder zu ersetzen.

12. Mehl, umfassend 0,1 bis 20 Gew.-%, bevorzugt 0,5 bis 15 Gew.-%, bevorzugter 1 bis 10 Gew.-% eines Lebensmitteladditivs gemäß einem der Ansprüche 1-7.

13. Teig, umfassend 0,1 bis 20 Gew.-%, bevorzugt 0,5 bis 15 Gew.-%, bevorzugter 1 bis 10 Gew.-% eines Lebensmitteladditivs gemäß einem der Ansprüche 1-7.

## Revendications

1. Additif alimentaire comprenant de 30 à 80 % d'une ou de plusieurs algues, choisies parmi le groupe des Chlorellaceae, Arthrospira, Monodopsidaceae et Skeletonemataceae, et de 70 à 20 % en poids d'un extrait de champignon, dans lequel l'extrait de champignon est dérivé des champignons du type agaricus, et dans lequel l'extrait de champignon lui-même comprend au moins 25 % en poids de oct-1-èn-3-ol.

2. Additif alimentaire selon la revendication 1, dans lequel l'Arthrospira est une Spirulina Platensis, dans lequel les Monodopsidaceae sont une Nannochloropsis gaditana, dans lequel les Skeletonemataceae sont une Skeletonema costatum, et
dans lequel les Chlorellaceae sont une Chlorella sorokiniana, une Chlorella vulgaris, une Chlorella pyrenoidosa ou une Chlorella marina, de préférence une Chlorella sorokiniana.

3. Additif alimentaire selon l'une quelconque des revendications 1-2, dans lequel le rapport de poids entre l'extrait de champignon et les algues est compris entre 0,20 et 10.

4. Additif alimentaire selon l'une quelconque des revendications 1-3, dans lequel l'additif alimentaire comprend également du KCl.

5. Additif alimentaire selon l'une quelconque des revendications 1-4, dans lequel l'additif alimentaire comprend également de l'acide ascorbique et/ou des sels de celui-ci.

6. Additif alimentaire selon l'une quelconque des revendications 1-5, dans lequel l'additif alimentaire comprend également des fibres.

7. Additif alimentaire selon l'une quelconque des revendications 1-6, dans lequel l'additif alimentaire est une poudre, une solution, une suspension ou une purée.

8. Utilisation de l'additif alimentaire selon l'une quelconque des revendications 1-7, dans la préparation d'un produit alimentaire destiné à l'alimentation humaine.

9. Utilisation de l'additif alimentaire selon la revendication 8, dans laquelle le produit alimentaire destiné à l'alimentation humaine est du pain et/ou un produit du pain et/ou une soupe et/ou une sauce et/ou un produit végétarien et/ou un produit de viande et/ou un produit de poisson.

10. Utilisation selon la revendication 9, dans laquelle l'additif alimentaire est utilisé dans la préparation de pain et de produits du pain.

11. Utilisation selon la revendication 8, 9 ou 10, dans laquelle l'additif alimentaire est utilisé pour réduire ou remplacer le NaCl.

12. Farine comprenant de 0,1 à 20 % en poids, de préférence de 0,5 à 15 % en poids, de manière davantage préférée de 1 à 10 % en poids d'un additif alimentaire selon l'une quelconque des revendications 1-7.

13. Pâte comprenant de 0,1 à 20 % en poids, de préférence de 0,5 à 15 % en poids, de manière davantage préférée de 1 à 10 % en poids d'un additif alimentaire selon l'une quelconque des revendications 1-7.
